# EUROPÄISCHE PATENTSCHRIFT

(11) **EP 2 582 565 B1**
(45) Veröffentlichungstag und Bekanntmachung des Hinweises auf die Patenterteilung: **06.08.2014**
(21) Anmeldenummer: 11727957.0
(22) Anmeldetag: 16.06.2011
(51) Int. Cl.: B62D 23/00, B62D 24/00, B62D 65/02, B62D 29/00, B62D 27/02, B62D 21/02

(54) **KRAFTFAHRZEUG MIT EINEM CHASSISRAHMEN UND EINEM FAHRZEUGAUFBAU**
MOTOR VEHICLE HAVING A CHASSIS FRAME AND A VEHICLE BODY
VEHICULE AUTOMOBILE PRESENTANT UN CADRE DE CHASSIS ET UNE CARROSSERIE DE VEHICULE

(30) Priorität: 21.06.2010 DE 102010030295
(43) Veröffentlichungstag der Anmeldung: 24.04.2013
(73) Patentinhaber: Bayerische Motoren Werke Aktiengesellschaft, 80809 München (DE)
(72) Erfinder: FUCHS, Horst-Arno, 82319 Starnberg (DE); FORSTER, Josef, 85051 Ingolstadt (DE)
(86) Internationale Anmeldenummer: PCT/EP2011/060004
(87) Internationale Veröffentlichungsnummer: WO 2011/160997

(56) Entgegenhaltungen:
- DE-A1- 3 702 619
- US-A- 5 964 490

## Beschreibung

Die Erfindung betrifft ein Kraftfahrzeug mit einem Chassisrahmen und einem Fahrzeugaufbau, die durch Verklebung und Verschraubung miteinander verbunden sind.

Ein derartiges Kraftfahrzeug ist beispielsweise aus der DE 34 29 839 A1 bekannt und weist an seinem Chassisrahmen einen nach oben offenen Kanal auf, der vor der Verbindung von Chassisrahmen und Fahrzeugaufbau mit Klebstoff gefüllt wird. Im zusammengebauten Zustand von Chassisrahmen und Fahrzeugaufbau greift ein vertikaler Verbindungsflansch am unteren Endabschnitt des Fahrzeugaufbaus von oben in den Klebstoffkanal des Chassisrahmens ein. Schraubverbindungen jeweils an den Ecken des Chassisrahmens bzw. des Fahrzeugaufbaus fixieren die beiden Baugruppen zueinander, so dass sich spezielle Spannvorrichtungen für die Dauer des Abbindens des Klebstoffs erübrigen. In einer aus der DE 37 02 619 A1 hervorgehenden Weiterentwicklung des bekannten Kraftfahrzeugs ist der Chassisrahmen in seinem vorderen Bereich verkürzt und wird durch einen separaten Vorderwagen ergänzt, der einen Vorderrahmen sowie einen Unterrahmen aufweist.

Die US 5,964,490 beschreibt ein weiteres gattungsgemäßes Kraftfahrzeug.

Aufgabe der Erfindung ist es, ein Kraftfahrzeug mit einer verbesserten Ausgestaltung von Chassisrahmen und Fahrzeugaufbau bereltzustellen, wobei Chassisrahmen und Fahrzeugaufbau in vorteilhafter Weise miteinander verbunden sind.

Diese Aufgabe wird durch ein Kraftfahrzeug mit den Merkmalen des Anspruchs 1 gelöst.

Kerngedanke der Erfindung ist, die Verklebung auf den Bereich oder auf einen Teilbereich zwischen den vorderen und den hinteren Verschraubungsstellen zu beschränken. Als vordere bzw. hintere Verschraubungsstellen werden hierbei die Orte der Schraubverbindung zwischen Chassisrahmen und Fahrzeugaufbau einerseits im Bereich der Vorderachse und andererselts im Bereich der Hinterachse bezeichnet. Durch die erfindungsgemäße Verschraubung im Bereich der beiden Achsen werden nahe den Endabschnitten des Kraftfahrzeugs liegende Verbindungsstellen geschaffen, die wesentlich zur Steifigkeit der aus Chassisrahmen und Fahrzeugaufbau zusammengesetzten Tragstruktur des Kraftfahrzeugs beitragen. Andererseits wird durch die großflächige Verklebung im Mittenbereich des Kraftfahrzeugs ein Verbund von Chassisrahmen und Fahrzeugaufbau mit hoher Steifigkeit und Festigkeit geschaffen, mit Vorteilen insbesondere bei der Krafteinleitung im Fall einer Kollision des Kraftfahrzeugs, da hierdurch die Crashenergie wirkungsvoll abgebaut werden kann, auch bei einem Seitencrash.

Durch die erfindungsgemäße Bauweise wird eine Tragstruktur für ein Kraftfahrzeug geschaffen, bei der im Herstellungsprozess des Kraftfahrzeugs mit dem Chassisrahmen und dem Fahrzeugaufbau zunächst zwei separate Baugruppen bestehen, die eine erleichterte und kostengünstige Montage erlauben, beispielsweise in räumlich getrennten Fertigungs- und Montageeinrichtungen. Entscheiden ist hierbei, dass weder Chassisrahmen noch Fahrzeugaufbau jeweils für sich eine ausreichende Steifigkeit und/oder Festigkeit für den Fahrbetrieb des Kraftfahrzeugs und für die Einleitung von Crashkräften im Fall einer Kollision des Kraftfahrzeugs aufweisen, sondern dass die Befestigungsbereiche von Chassisrahmen und Fahrzeugaufbau so aufeinander abgestimmt sind und die Art der Befestigung so gewählt ist, dass die zusammengesetzte Tragstruktur aus Chassisrahmen und Fahrzeugaufbau insgesamt die geforderten Steifigkeits- und Festigkeitsanforderungen erfüllt. Somit handelt es sich bei der durch die Kombination von Chassisrahmen und Fahrzeugaufbau erzielten Tragstruktur des erfindungsgemäßen Kraftfahrzeugs vom Grundsatz um eine "selbsttragende Karosserie" und nicht um eine Karosserie mit einer Funktionstrennung von Chassisrahmen und Fahrzeugaufbau.

Die Verschraubung erfolgt bevorzugt oberhalb des Bereiches von Vorder- und/oder Hinterachse, besonders bevorzugt in demjenigen Bereich des Chassisrahmens (und dem korrespondierenden Bereich des Fahrzeugaufbaus), an dem sich die Radaufhängung am Chassisrahmen abstützt. In einer vorteilhaften Ausführungsform der Erfindung erfolgt die Verschraubung an der oberen Aufnahme einer Feder-Dämpfer-Einheit, nachfolgend als Federbein bezeichnet bzw. an der oberen Aufnahme eines Stoßdämpfers oder einer Federeinheit.

Die Verschraubungsstellen sind in einer bevorzugten Weiterbildung der Erfindung als flächige Bereiche ausgeführt, so dass sich über die Schraubverbindung hohe Kräfte übertragen lassen. Die Verschraubung an jeder der bevorzugt vier Verschraubungsstellen (jeweils rechts und links an Vorder- und Hinterachse) erfolgt gegebenenfalls durch jeweils mehrere Schrauben.

In bevorzugter Ausgestaltung der Erfindung werden zur Herstellung der Klebeverbindung Bereiche mit langgestreckten und parallel zueinander verlaufenden Klebeflächen geschaffen, durch die sich eine große Belastbarkeit der Klebeverbindung ergibt. Durch den mit erfolgter Verschraubung festgelegten Abstand der korrespondierenden Klebeflächen von Chassisrahmen und Fahrzeugaufbau wird ein definiertes Maß des Klebespaltes erreicht. Durch die parallele Ausbildung der Klebeflächen sind diese unempfindlich gegenüber Bauteil- und/oder Montagetoleranzen.

Der Abstand der Klebeflächen kann erforderlichenfalls durch Maßnahmen im Bereich der Verschraubungsstellen verändert werden, beispielsweise durch Einbringen einer Zwischenlage zwischen die Verschraubungsflächen von Chassisrahmen und Fahrzeugaufbau oder durch Entfernen von Material an den Verschraubungsflächen.

Der Klebespalt hat eine Höhe von bevorzugt mindestens drei Millimetern. Bei Verwendung eines Klebstoffs mittlerer Schubsteifigkeit kann somit durch die relativ große Dicke der Klebstoffraupe in der Klebeverbindung ein Ausgleich unterschiedlicher Wärmeausdehnungen von Chassisrahmen und Fahrzeugaufbau erfolgen.

Der Klebstoff ist bevorzugt ein Einkomponentenkleber mit ausreichend langern "offenen Fenster" nach dem Auftrag des Klebstoffs und vergleichsweise schneller Aushärtung nach dem Zusammenfügen von Chassisrahmen und Fahrzeugaufbau. Die Aushärtung kann durch Beimischung eines "Boosters" beschleunigt werden. Außerdem wird durch den "Booster" eine über den gesamten Querschnitt der Klebstoffraupe gleichmäßige und von der Umgebungsfeuchtigkeit unabhängige Aushärtung erreicht. Durch die vor dem Fügen der beiden Klebepartner erfolgte Verschraubung kann unabhängig vom endgültigem Aushärten des Klebstoffs das Kraftfahrzeug im Fertigungsablauf weiter bewegt und weiter montiert werden, so dass die Verschraubung neben ihrem Beitrag zur Steifigkeit und Festigkeit der Tragstruktur des Kraftfahrzeugs auch die Taktzeiten in der Montage reduziert, indem Wartezeiten für die Aushärtung des Klebstoffs entfallen.

In weiterer Ausgestaltung der Erfindung weist der Chassisrahmen als tragende Elemente in seinem mittleren Bereich einen rechten und einen linken Längsträger auf, die weiterhin durch einen vorderen und einen hinteren Querträger zu einem geschlossenen rechteckförmigen Tragrahmen ergänzt werden können. Auf die Oberseiten der Längs- und/oder Querträger bzw. des Tragrahmens kann der Klebstoff in vorteilhafter Weise aufgetragen werden.

Wenn die Träger so vorhanden und angeordnet sind, dass sie den oben beschriebenen rechteckförmigen Tragrahmen bilden, liegt damit ein sehr steifer Tragrahmen vor, der eine umlaufend ringförmige Klebeverbindung im Mittenbereich des Kraftfahrzeugs ermöglicht

In einer Ausgestaltung der Erfindung kann der Raum innerhalb des rechteckförmigen Tragrahmens zur Unterbringung eines Energiespeichers, insbesondere einer elektrischen Batterie, beispielsweise in Lithium-Ionen-Technik, verwendet werden. Der Verbund aus Tragrahmen am Chassisrahmen und korrespondierender Tragstruktur am Fahrzeugaufbau ist hierbei besonders steif und in der Lage, hohe Energien, beispielsweise bei einem Seitencrash des Kraftfahrzeugs, gezielt abzubauen und hierdurch den Energiespeicher vor unfallbedingten Beschädigungen zu schützen.

In weiterer Ausgestaltung der Erfindung wird durch den Höhenversatz zwischen der Verklebung einerseits (entlang der Längs- und/oder Querträger bzw. des Tragrahmens) und den im Bereich der Achsen, bevorzugt im Bereich oberhalb der Achsen, angeordneten Verschraubungsstellen andererseits eine hohe Steifigkeit der Tragstruktur des Kraftfahrzeugs gegenüber solchen Krafteinleitungen erreicht, die Momente auf die Tragstruktur des erfindungsgemäßen Kraftfahrzeugs ausüben.

Der Fahrzeugaufbau ist in einer Weiterbildung der Erfindung ein unterseitig durch einen Boden geschlossenes Gebilde, das in der Lage ist, in Querrichtung des Kraftfahrzeugs auf Höhe des Bodens eingeleitete Kräfte auf die gegenüberliegende Seite weiterzuleiten. Außerdem kann der Fahrzeugaufbau somit während des Fertigungsprozesses unabhängig vom Chassisrahmen mit Innenausstattungskomponenten bestückt werden kann, beispielsweise mit Auskleidungen des Bodens, der Fahrzeuginnenwände und der Dachinnenseite sowie mit Sitzen, Mittelkonsole, Instrumentenkombi, Bedienelementen, etc.

In einer bevorzugten Ausgestaltung der Erfindung besteht der Chassisrahmen aus einem metallischen Werkstoff, bevorzugt aus einem Leichtmetallwerkstoff wie beispielsweise einer Aluminiumlegierung. Die einzelnen Komponenten des Chassisrahmens sind hierbei zum Beispiel durch Schweißen, Kleben, Nieten, Schrauben oder jede andere geeignete Fügemethode miteinander verbunden. Die Komponenten können von Blechen, Strangprofilen und/oder Gussbauteilen gebildet sein.

Der Fahrzeugaufbau setzt sich bevorzugt aus Bauteilen, insbesondere schalenförmigen Bauteilen, aus einem Kunststoffmaterial zusammen. Besonders eigenen sich hierfür kohlefaserverstärkte Kunststoffe. Die Verbindung der einzelnen Komponenten des Fahrzeugaufbaus erfolgt vorzugsweise durch Verklebung, beispielsweise mit einem Zweikomponentenkleber.

Zur Reduzierung des Energiebedarfs bei der Herstellung des erfindungsgemäßen Kraftfahrzeugs wird in einer Ausgestaltung der Erfindung bei einem metallischen Chassisrahmen auf eine KTL-Beschichtung und/oder den Auftrag einer herkömmlichen Lackbeschichtung verzichtet. Zur Erzielung reproduzierbar belastbarer Klebeverbindungen werden die Klebeflächen des Chassisrahmens vor der Verklebung behandelt, beispielsweise durch chemische Methoden gereinigt, passiviert, einer Plasmabehandlung unterzogen, mit einer Pyrosil-Beschichtung versehen etc. Die in Zusammenhang mit der vorliegenden Erfindung genannten Reinigungs- und Vorbereitungsmaßnahmen fallen nicht unter den Begriff "Oberflachenbeschichtung".

Alle Richtungs- und Lageangaben in Zusammenhang mit Komponenten des erfindungsgemäßen Kraftfahrzeugs beziehen sich jeweils auf die aus Chassisrahmen und Fahrzeugaufbau zusammengesetzte Tragstruktur des Kraftfahrzeugs und auf die Fahrtrichtung des Kraftfahrzeugs bei Vorwärtsfahrt.

Für die Herstellung eines erfindungsgemäßen Kraftfahrzeugs wird beispielsweise folgender Fertigungsablauf vorgeschlagen:
- Fertigung des Chassisrahmens aus Komponenten aus Aluminiumwerkstoff durch Schweißen und/oder Kleben und/oder Nieten und/oder Schrauben, wobei die Komponenten Gussteile und/oder Strangprofile und/oder Blechteile sein können
- Fertigung des Fahrzeugaufbaus aus Komponenten aus kohlefaserverstärktern Kunststoff, bevorzugt durch Verklebung, wobei partiell Verstärkungen aus einem metallischen Werkstoff integriert sein können
- Bestückung des Chassisrahmens mit Elementen der vorderen sowie der hinteren Radaufhängung und mit wenigstens einem Antriebsaggregat und/oder Getriebe und/oder mit weiteren Komponenten des Antriebsstrangs
- Bestückung des Fahrzeugaufbaus mit Anbauteilen und/oder Ausstattungsteilen
- Reinigung der Klebeflächen insbesondere am Chassisrahmen
- Auftrag des Klebstoffs auf die Klebeflächen, bevorzugt auf die Klebeflächen des Chassisrahmens
- Aufsetzen des Fahrzeugaufbaus auf den Chassisrahmen (oder umgekehrt)
- Verschraubung des Fahrzeugaufbaus mit dem Chassisrahmen an den Verschraubungsstellen im Bereich oberhalb der Vorder- und der Hinterachse, bevorzugt im Bereich der oberen Aufnahmen der Federbeine oder dergleichen
- Mit dem Verschrauben stellt sich selbsttätig ein definierter Klebespalt zwischen Chassisrahmen und Fahrzeugaufbau ein.
- Aushärten des Klebstoffs, wobei aufgrund der Verschraubung bereits vor Abschluss der Aushärtung eine ausreichend belastbare Verbindung von Chassisrahmen und Fahrzeugaufbau besteht, so dass das Kraftfahrzeug für weitere Montageumfänge, Oberflächenbehandlungen etc. zur Verfügung steht bzw. für den weiteren Produktionsablauf transportiert und/oder aus eigener Kraft angetrieben werden kann.

Mögliche Ausführungsbeispiele der Erfindung sind in der Zeichnung dargestellt und werden nachfolgend näher erläutert. Es zeigt:
- Fig. 1: eine schematische Perspektivdarstellung der Tragstruktur eines erfindungsgemäßen Kraftfahrzeugs, vor der Verbindung von Chassisrahmen und Fahrzeugaufbau,
- Fig. 2: eine perspektivische Ansicht auf den Chassisrahmen des Kraftfahrzeugs von Fig. 1, mit aufgetragener Klebstoffraupe,
- Fig. 3: eine Seitenansicht der Tragstruktur des Kraftfahrzeugs von Fig. 1 im zusammengesetzten Zustand,
- Fig. 4: eine Schnittdarstellung einer vorderen Verschraubungsstelle,
- Fig. 5: eine Schnittdarstellung einer hinteren Verschraubungsstelle und
- Fig. 6a bis 6c: schematische Darstellungen der Kraftpfade innerhalb der Tragstruktur des erfindungsgemäßen Kraftfahrzeugs bei verschiedenen Lastfällen.

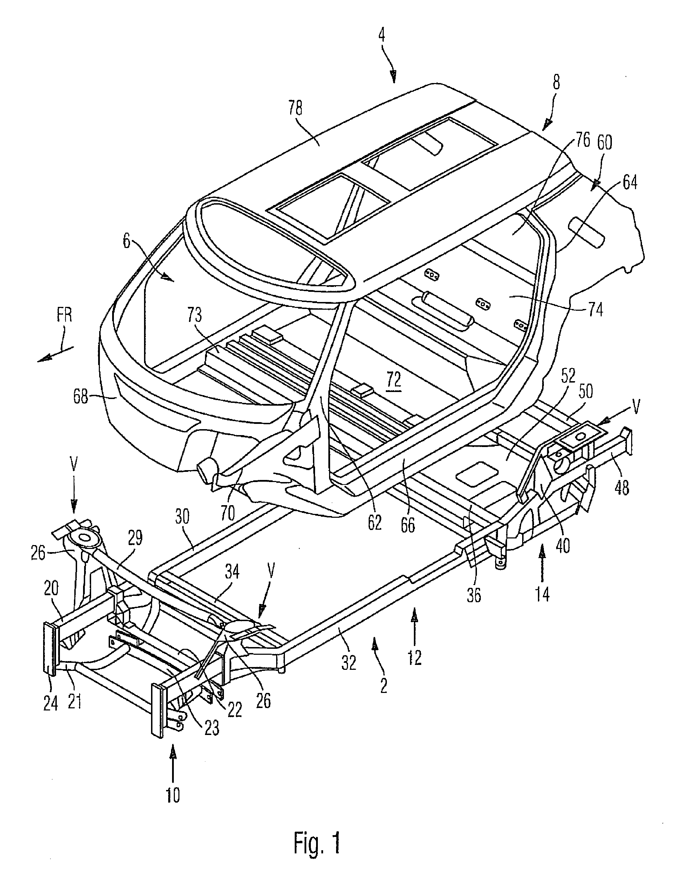

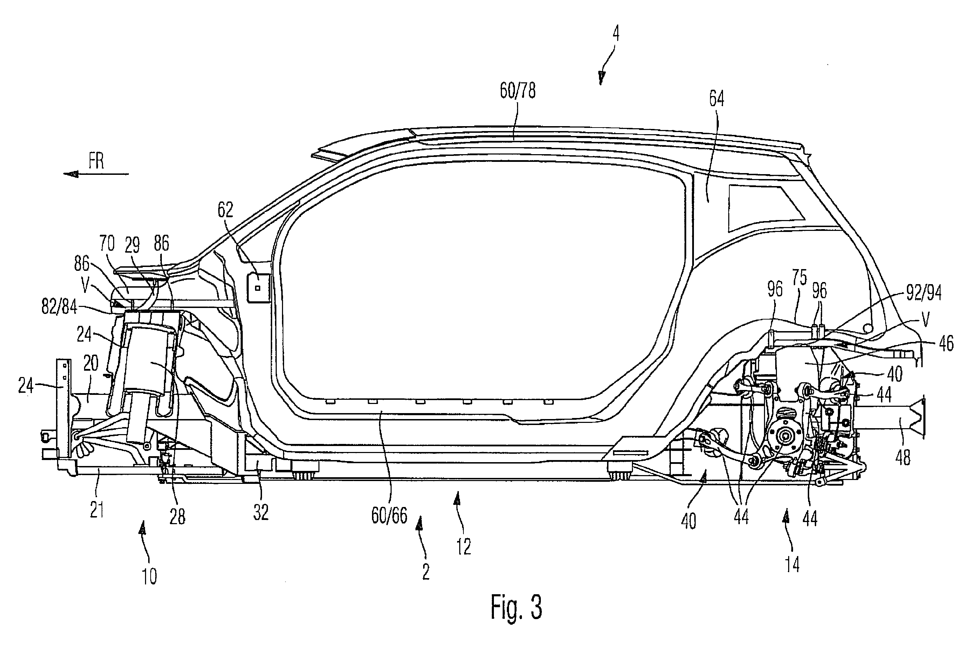

Fig. 1 zeigt die Tragstruktur eines erfindungsgemäßen Kraftfahrzeugs vor der Verbindung der beiden Baugruppen Chassisrahmen 2 und Fahrzeugaufbau 4. In Fig. 3 sind die beiden Baugruppen im zusammengesetzten Zustand darstellt.

Der Chassisrahmen 2 setzt sich aus einer Mehrzahl von Einzelbauteilen aus einem metallischen Werkstoff zusammen. Bevorzugt sind die Einzelbauteile aus Leichtmetall-Legierungen gefertigt, beispielsweise aus Aluminium-Legierungen.

Der Chassisrahmen 2 weist unter Bezug auf die Fahrtrichtung FR des Kraftfahrzeugs einen vorderen Abschnitt 10, einen mittleren Abschnitt 12 und einen hinteren Abschnitt 14 auf. Die Abschnitte 10 bis 14 sind im Wesentlichen symmetrisch zur Längsmittenebene des Kraftfahrzeugs ausgebildet.

Der vordere Abschnitt 10 setzt sich hauptsächlich aus vorderen oberen und unteren Längsträgern 20 und 21, Querstreben 22 und 23, Stoßfängerkonsolen 24, Federbeinaufnahmen 26 sowie mehreren Verbindungs- und Knotenblechen zusammen. Die Bauteile 20 bis 24 werden von Strangprofilen aus Aluminium gebildet. Die Federbeinaufnahmen 26 sind Druckgussbauteile aus Aluminium. Die übrigen Bauteile sind aus Blechen oder aus Strangprofilen aus Aluminium gefertigt. Der vordere Abschnitt 10 nimmt die Elemente einer nicht dargestellten Vorderachse (einschließlich der vorderen Federbeine 28) auf. Der verbleibende Freiraum im vorderen Abschnitt 10 dient am fertig montierten Kraftfahrzeug als Gepäckraum.

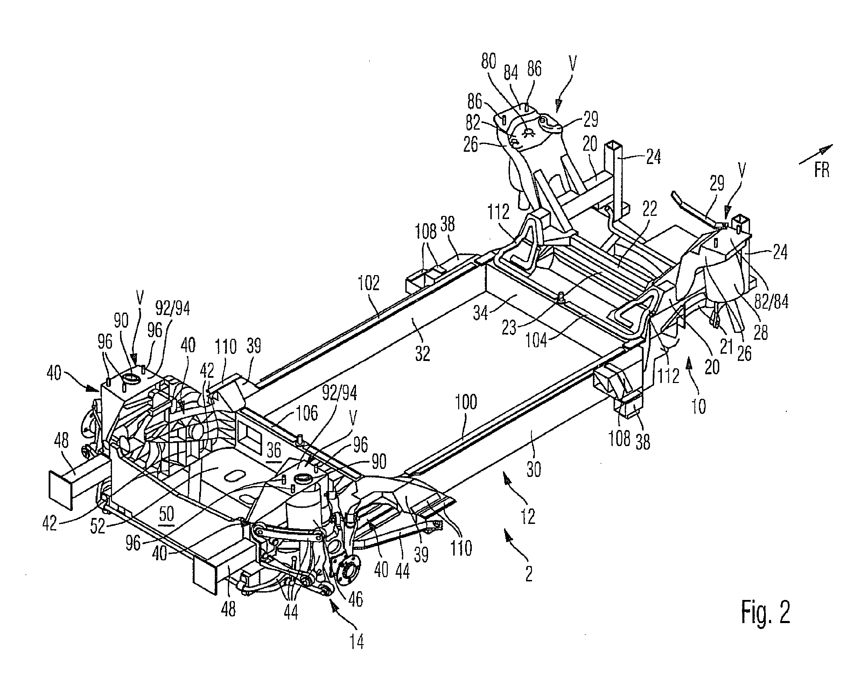

Der mittlere Abschnitt 12 des Chassisrahmens 2 ist im Wesentlichen ein rechteckförmiger Rahmen aus einem rechten und einem linken seitlichen Längsträger 30 bzw. 32 sowie einem vorderen und einem hinteren Querträger 34 bzw. 36, die die vorderen bzw. hinteren Enden der seitlichen Längsträger 30 und 32 verbinden. Die Träger 30 bis 36 werden von Strangprofilen aus Aluminium gebildet. Die Oberseiten der Träger 30 bis 36 verlaufen zumindest annähernd in einer Ebene, die etwa horizontal ausgerichtet ist. Im Bereich der vorderen und der hinteren Enden der Längsträger 30 und 32 sind zusätzlich Konsolen 38 und 39 (siehe insbesondere Fig. 2) vorgesehen. Das von den Trägern 30 bis 36 gebildete Rechteck ist innenseitig frei. In diesem Freiraum ist am komplett montierten Kraftfahrzeug ein Energiespeicher angeordnet, bevorzugt ein elektrischer Energiespeicher. Alternativ oder zusätzlich kann jedoch in diesem Raum auch ein Behälter für Benzin- oder Dieselkraftstoff, Erdgas oder Wasserstoff vorgesehen sein.

Der hintere Abschnitt 14 des Chassisrahmens 2 wird hauptsächlich von seitlichen Integralbauteilen 40 aus Aluminium-Druckguss gebildet. Diese komplex geformten und großvolumigen Integralbauteile 40 weisen eine Mehrzahl von Versteifungsrippen 42 auf. An den Integralbauteilen 40 sind die Elemente 44 einer Hinterachse einschließlich der hinteren Federbeine 46 angeordnet. Zwischen den beiden Integralbauteilen 40 ist ein nicht dargestelltes Antriebsaggregat samt Getriebe aufgenommen. Das Antriebsaggregat ist bevorzugt ein Elektromotor, gegebenenfalls ergänzt durch einen kleinvolumigen Verbrennungsmotor zur Reichweitenerhöhung. Selbstverständlich kann das Antriebsaggregat auch ein Verbrennungsmotor sein, gegebenenfalls mit Elektromotor (Hybridantrieb). Rückseitig schließen sich an die Integralbauteile 40 hintere Längsträger 48 an, die von Aluminium-Strangprofilen gebildet werden. Ergänzt wird der hintere Abschnitt 14 von flächigen Blechbauteilen 50 und 52 aus Aluminium.

Alternativ kann das Antriebsaggregat auch im vorderen Abschnitt 10 des Chassisrahmens 2 angeordnet sein. Selbstverständlich können auch beide Abschnitte 10 und 14 ein Antriebsaggregat oder mehrere Antriebsaggregate aufweisen.

Der Fahrzeugaufbau 4 bildet die Fahrgastzelle 6 sowie einen hinteren Gepäckraum 8. Unter anderem weist der Fahrzeugaufbau 4 folgende Komponenten auf: Seitenrahmen 60 mit A-Säulen 62, C-Säulen 64 und seitlichen Längsträgern 66, eine Stirnwand 68, vordere Stützträger 70, einen als aussteifendes Schubfeld ausgebildeten Boden 72, eine hintere Abschlusswand 74, hintere Stützträger 75, eine Hutablage 76 und ein Dach 78. Die genannten Komponenten sind aus einem Kunststoffmaterial, bevorzugt aus kohlefaserverstärktern Kunststoff und sind beispielsweise durch Verklebung mit einem Zweikomponentenkleber miteinander verbunden. Der Boden 72 wird beispielsweise durch wenigstens einen Sitzquerträger 73 aus einem metallischen Werkstoff, zum Beispiel aus einem Aluminium-Strangprofil, verstärkt. Der Sitzquerträger 73 ist auf den Boden 72 aufgesetzt oder in den Boden 72 integriert.

Das Kraftfahrzeug wird von nicht dargestellten Beplankungsteilen (bevorzugt aus einem Kunststoffmaterial) komplettiert. Diese Beplankungsteile sind ebenso wie unmittelbar als Außenhaut des Kraftfahrzeugs in Erscheinung tretende Komponenten des Fahrzeugaufbaus 4 bevorzugt nicht lackiert, sondern mit Folie überzogen.

Chassisrahmen 2 und Fahrzeugaufbau 4 werden auf getrennten Montagestraßen bestückt und erst danach als vormontierte Baueinheiten zusammengeführt. Beispielsweise werden in den Chassisrahmen 2 die Elemente von Vorder- und Hinterachse sowie das Antriebsaggregat eingesetzt. Der Fahrzeugaufbau 4 wird zum Beispiel mit wesentlichen Bauteilen der Innenauskleidung und/oder der Innenausstattung versehen.

Chassisrahmen 2 und Fahrzeugaufbau 4 sind einerseits durch Verschraubung und andererseits durch Verklebung miteinander verbunden.

Die Verschraubung erfolgt an vier Verschraubungsstellen V, jeweils im Bereich der oberen Abstützung der Federbeine 28 und 46. Hierzu sind sowohl an den Federbeinaufnahmen 26 des vorderen Abschnitts 10 des Chassisrahmens 2 als auch an den Integralbauteilen 40 des hinteren Abschnitts 14 die jeweiligen Bereiche der oberen Abstützungen der Federbeine 28 und 46 vergrößert ausgebildet, wie nachfolgend näher beschrieben.

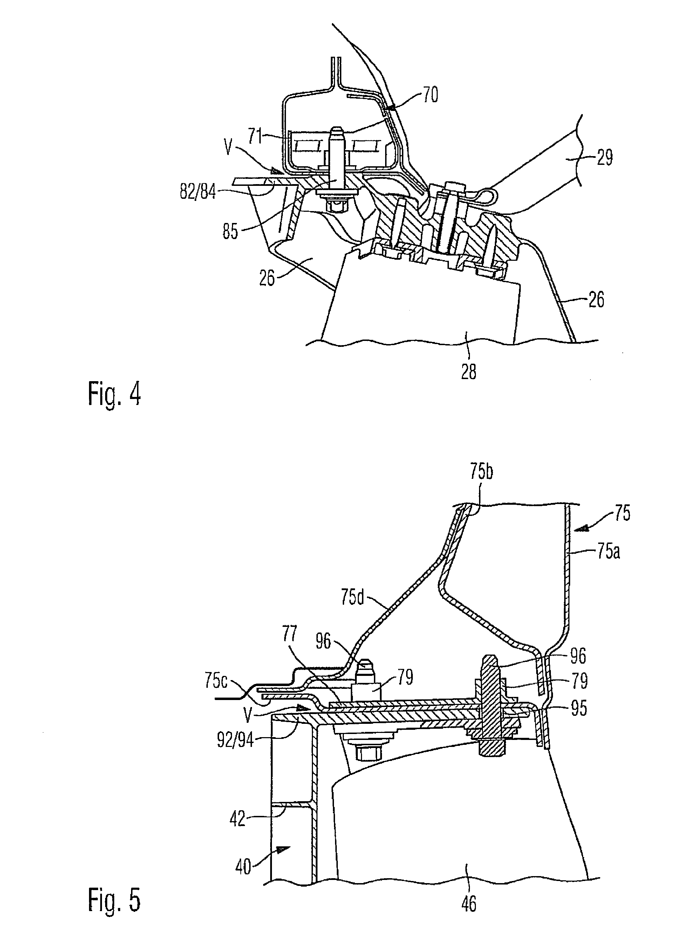

Die Verschraubungsstellen V am vorderen Abschnitt 90 des Chassisrahmens 2 sind in Fig. 4 am Beispiel der linken Verschraubungsstelle V im Schnitt dargestellt. Der Schnitt verläuft durch die Anbindung einer so genannten Domstrebe 29, die die beiden Federbeinaufnahmen 26 miteinander verbindet. Auch Fig. 2 zeigt die Verschraubungsstellen V sehr anschaulich. An den Federbelnaufnahmen 26 sind die Aufnahmen für die oberen Enden der Federbeine 28 mit 80 bezeichnet. Die etwa horizontal verlaufenden Oberseiten 82 der Federbeinaufnahmen 26 sind nach außen verbreitert und weisen in dem hierdurch geschaffenen äußeren Befestigungsbereich 84 Durchgangsöffnungen 85 für zwei Schrauben 86 auf (siehe auch Fig. 3). Wie aus Fig. 4 hervorgeht, ist der Stützträger 70 in Blechschalenbauweise hergestellt und weist ein innenliegendes Verslärkungsblech 71 auf.

Die Verschraubungsstellen V am hinteren Abschnitt 12 des Chassisrahmens 2 sind in Fig. 5 am Beispiel der rechten Verschraubungsstelle V im Schnitt dargestellt. Der Schnitt verläuft durch die hintere der beiden äußeren Befestigungsschrauben 96. Die Anordnung der Befestigungsschrauben 96 geht sehr anschaulich aus Fig. 2 hervor. An den waagrecht verlaufenden Oberseiten 92 der Integralbauteile 40 sind in Fig. 2 die Aufnahmen 90 für die Federbeine 46 zu erkennen. Die etwa horizontal verlaufenden Oberseiten 92 der Integralbauteile 40 sind vergrößert ausgebildet und weisen in dem hierdurch geschaffenen Befestigungsbereich 94 Durchgangsöffnungen 95 für die bereits oben erwähnten drei Schrauben 96 auf. Die Schnittdarstellung der Fig. 5 zeigt die Gestaltung der Tragstruktur des Fahrzeugaufbaus 4 im Bereich des hinteren Stützträgers 75, der sich aus den miteinander verklebten Schalenbauteilen 75a, 75b, 75c und 75d aus kohlefaserverstärktem Kunststoff zusammensetzt und innenseitig durch eine metallische Einlage 77 mit Innengewinden 79 für die drei Schrauben 96 verstärkt ist.

Die Befestigungsbereiche 84 und 94 des Chassisrahmens 2 sind im Wesentlichen horizontal ausgerichtet und ebenflächig ausgebildet. Hierdurch werden Anlagebereiche für die korrespondierend ausgebildeten Befestigungsbereiche des Fahrzeugaufbaus 4 bereitgestellt.

Wie aus den Fig. 4 und 5 hervorgeht, befinden sich die oben erwähnten korrespondierenden Befestigungsbereiche des Fahrzeugaufbaus 4 an der Unterseite der vorderen Stützträger 70 bzw. an der Unterseite der hinteren Stützträger 75. Diese korrespondierenden Befestigungsbereiche sind ebenfalls im Wesentlichen horizontal ausgerichtet und ebenflächig ausgebildet. Somit liegen Chassisrahmen 2 und Fahrzeugaufbau 4 an den vier beschrieben Verschraubungsstellen V vollflächig aufeinander. Hierdurch sind eine tragfähige Schraubverbindung und die Übertragung hoher Kräfte in allen Raumrichtungen möglich.

Zwischen den Befestigungsflächen an den Verschraubungsstellen V ist kein Klebstoff eingebracht.

Die Verklebung erfolgt großflächig zwischen dem mittleren Abschnitt 12 des Chassisrahmens 2 und den korrespondierenden Flächen des Fahrzeugaufbaus 4, wie in Fig. 2 näher dargestellt. Hierzu werden Klebstoffraupen 100 bis 106 mittig auf die horizontal verlaufenden Oberseiten der seitlichen Längsträger 30 und 32 sowie der Querträger 34 und 36 aufgebracht. Somit wird am Chassisrahmen 2 eine ringartig geschlossene rechteckförmige Klebstoffbahn in einer im Wesentlichen horizontalen Ebene erzeugt. Auch die vorderen und die hinteren Konsolen 38 und 39 sind mit Klebstoffraupen 108 und 110 belegt. Zudem ist die Klebstoffraupe 104 am vorderen Querträger 34 durch Klebstoffraupen 112 erweitert, die schräg nach vorne oben verlaufen und sich bis in den Bereich des hinteren Endabschnitts des oberen vorderen Längsträgers 20 erstrecken.

Selbstverständlich kann auch im Anschluss an die Klebstoffraupe 106 oder in unmittelbarer Fortsetzung der Klebstoffraupe 106 wenigstens eine zusätzliche Klebstoffraupe vorgesehen sein, die schräg nach hinten oben verläuft und hierdurch die Verklebung in den Bereich des hinteren Abschnitts 14 des Chassisrahmens 2 erweitert. Beim vorliegenden Ausführungsbelspiel ist dies jedoch wegen der zerklüfteten Oberfläche der Integralbauteile 40 nicht der Fall. Außerdem wären in diesem Bereich wegen der erhöhten Betriebstemperaturen infolge des heckseitigen Antriebsaggregats an den Klebstoff erhöhte Anforderungen zu stellen.

Am Fahrzeugaufbau 4 sind Klebeflächen ausgebildet, die mit den Klebeflächen am Chassisrahmen 2 korrespondieren, wie nachfolgend näher beschrieben ist.

An der Unterseite der seitlichen Längsträger 66 des Fahrzeugaufbaus 4, bevorzugt etwas einwärts zur Fahrzeugmitte hin versetzt, sind parallel zu den Oberseiten der seitlichen Längsträger 30 und 32 des Chassisrahmens 2 verlaufende Klebeflächen vorgesehen, für die Klebstoffraupen 100 und 102. Außerdem weist der Fahrzeugaufbau 4 in diesen Bereichen auch Klebeflächen auf, die mit den Konsolen 38 und 39 korrespondieren und den Klebstoffraupen 108 und 110 zugeordnet sind.

Ebenso sind an der Unterseite des Fahrzeugaufbaus 4 vorne und hinten quer zur Fahrtrichtung FR verlaufende Klebeflächen vorgesehen, die den Klebstoffraupen 104 bzw. 106 zugeordnet sind. Für die erweiterten Klebstoffraupen 112 sind im Bereich der Stirnwand 68 des Fahrzeugaufbaus 4 ebenfalls korrespondierende Klebeflächen vorgesehen.

Alle Klebeverbindungen zwischen Chassisrahmen 2 und Fahrzeugaufbau 4 und alle an der Verklebung beteiligten Bauteile von Chassisrahmen 2 und Fahrzeugaufbau 4 sind so steif ausgebildet, dass die Einleitung hoher Kräfte vom Chassisrahmen 2 in den Fahrzeugaufbau 4 und umgekehrt möglich ist. Zur Weiterleitung der eingeleiteten Kräfte sind auch die sich an die Klebeflächen anschließenden Bauteile und Bereiche ausreichend steif ausgebildet. Bei den Kräften handelt es sich zum einen um Kräfte, die im normalen Fahrbetrieb des Kraftfahrzeugs entstehen. Im Besonderen handelt es sich bei den Kräften jedoch um eingeleitete Crashkräfte.

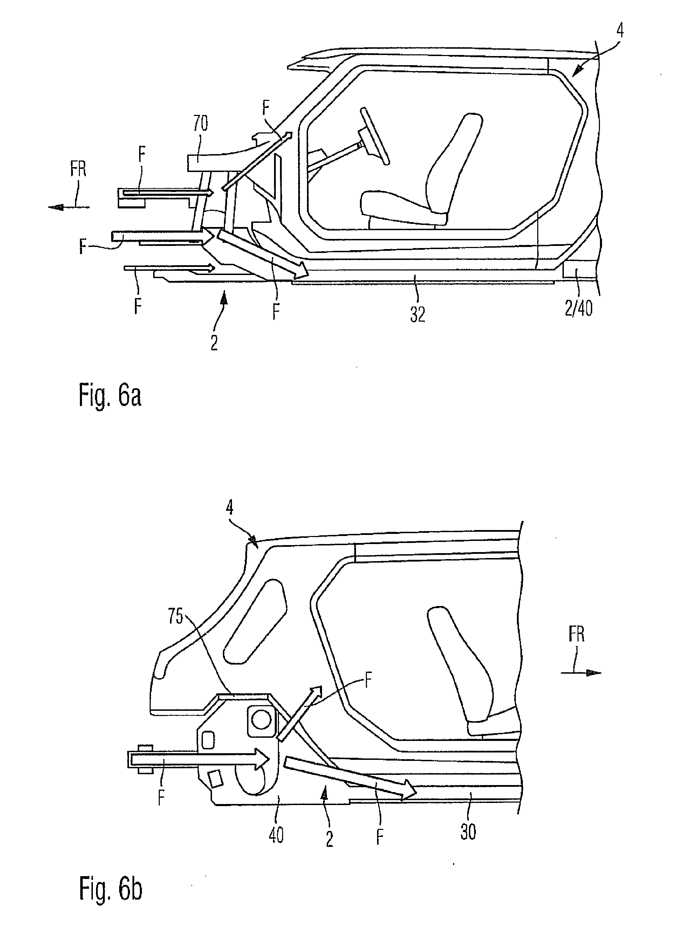

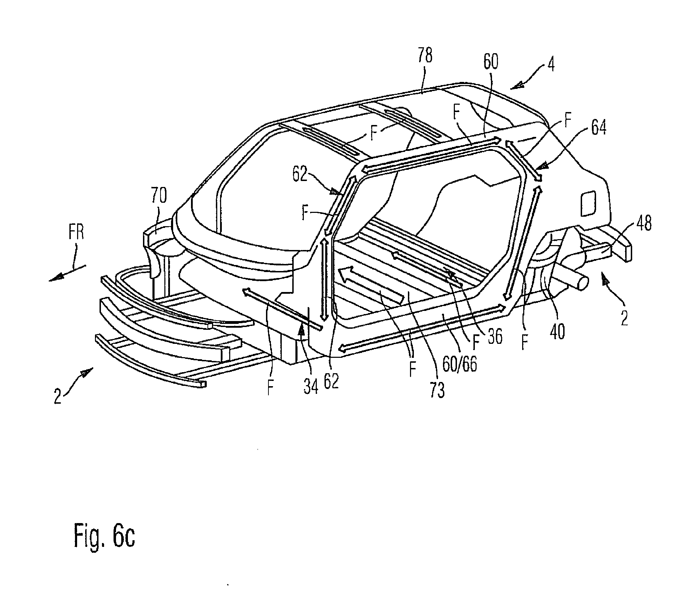

Wie aus den Fig. 6a und 6b hervorgeht, steht mit dem erfindungsgemäßen Verbund aus Chassisrahmen 2 und Fahrzeugaufbau 4 quasi eine selbsttragende Karosserie für ein Kraftfahrzeug zur Verfügung, bei der Crashkräfte, die bei einer Front- oder Heckkollision in den Chassisrahmen 2 eingeleitet werden, in den Fahrzeugaufbau 4 weitergeleitet werden, so dass die gesamte Tragstruktur des Kraftfahrzeugs zum Abbau der Kollisionsenergie herangezogen wird. Die Lastpfade sind mit Pfeilen F gekennzeichnet. Auch bei einer seitlichen Kollision gemäß Fig. 6c kommt es zu einer Krafteinleitung sowohl in den Fahrzeugaufbau 4 als auch in den Chassisrahmen 2, dort insbesondere in die beiden Querträger 34 und 36. Entscheidenden Einfluss auf die Crashsteifigkeit hat hierbei der Boden 72 des Fahrzeugaufbaus 4, insbesondere der in den Boden integrierte Sitzquerträger 73. Durch den quersteifen Fahrzeugaufbau 4 können sich die Kollisionskräfte auch an der kollisionsabgewandten Seite der Tragstruktur des Kraftfahrzeugs abstützen. Der Seitenrahmen 60 mit der A-Säule 62, dem Seitenspriegel des Daches 78, der C-Säule 64 und den Längsträgern 66 bildet hierbei einen steifen Ringverbund, der die Crashkräfte großflächig aufnimmt und auch in der höhenversetzten Ebene des Daches 78 eine Kraftweiterleitung zur kollisionsabgewandten Seite des Fahrzeugaufbaus 4 bewirkt.

Der entscheidende Vorteil, der sich bei einer großflächigen Verklebung gegenüber einer Vielzahl einzelner Schraub- oder Nietverbindungen ergibt, liegt in der gleichmäßigen Krafteinleitung durch die große Klebefläche. Bei den Komponenten der Tragstruktur, die sich beispielsweise bei einem Crash im Kraftfluss befinden, handelt es sich um gewichtsoptimierte Bauteile mit vergleichsweise geringer Wandstärke, die jedoch ohne Weiteres in der Lage sind, die auftretenden Kräfte über die großen Klebeflächen aufzunehmen und weiterzuleiten. Demgegenüber wären bei einer gleichwertigen Gestaltung als Mehrzahl von Schraub- oder Nietverbindungen zusätzliche Versteifungsmaßnahmen an jeder einzelnen Schraube bzw. an jedem einzelnen Niet erforderlich.

Unmittelbar vor dem Zusammenfügen der vormontieren Baueinheiten von Chassisrahmen 2 und Fahrzeugaufbau 4 werden die Klebstoffraupen 100 bis 112 auf die Klebeflächen des Chassisrahmens 2 aufgetragen. Die Klebstoffraupen 100 bis 112 haben hierbei im Querschnitt beispielsweise die Form eines gleichschenkligen Trapezes, wobei die untere Grundseite des Trapezes, mit der die Klebstoffraupe 100 bis 112 auf der Oberseite der Bauteile des Chassisrahmens 2 aufliegt, größer ist als die obere Grundseite. Alternativ kann die Klebstoffraupe 100 bis 112 auch einen dreieckförmigen Querschnitt aufweisen. Die Höhe der Klebstoffraupe 100 bis 112 ist größer als der Klebespalt, der sich beim Verschrauben von Chassisrahmen 2 und Fahrzeugaufbau 4 einstellt. Die Viskosität des Klebstoffes ist derart bemessen, dass die Form der Klebstoffraupe 100 bis 112 nach deren Auftrag auf den Chassisrahmen 2 im Wesentlichen erhalten bleibt.

Mit dem Verschrauben von Chassisrahmen 2 und Fahrzeugaufbau 4 an den vier Verschraubungsstellen V werden die Klebstoffraupen 100 bis 112 durch das hierbei erfolgende Zusammenführen der korrespondierenden Klebeflächen von Chassisrahmen 2 und Fahrzeugaufbau 4 auf ein definiertes Maß zusammengedrückt. Der Klebespalt ist dabei so bemessen, dass auch bei Addition der maximal zulässigen Herstelltoleranzen von Chassisrahmen 2 und Fahrzeugaufbau 4 ein Mindestmaß für den Klebespalt gewährleistet ist.

Da insbesondere die Klebstoffraupen 100 und 102 eine beträchtliche Länge aufweisen, hängt das Mindestmaß für die Klebstoffdicke von dem Längenausgleich ab, der bei unterschiedlichen Materialien von Chassisrahmen 2 und Fahrzeugaufbau 4 und dementsprechend unterschiedlichen Wärmedehnungen von Chassisrahmen 2 und Fahrzeugaufbau 4 in den Klebstoffraupen 100 und 102 zu erfolgen hat. Anderseits ist die Dicke der Klebstoffraupen 100 und 102 (und selbstverständlich auch der übrigen Klebstoffraupen 104 bis 112) nach oben hin begrenzt, da mit zunehmender Dicke die Steifigkeit der Klebeverbindung abnimmt.

Für die Klebeverbindungen zwischen Chassisrahmen 2 und Fahrzeugaufbau 4 wird beispielhaft ein Klebstoff mittlerer Schubsteifigkeit vorgeschlagen, der bei -30 °C eine Schubsteifigkeit von etwa 70 MPa und bei +70 °C eine Schubsteifigkeit von etwa 15 MPa aufweist und damit einen vergleichsweise geringen temperaturbedingten Abfall der Schubsteifigkeit hat.

Durch diese Schubstelfigkeitseigenschaften ist gewährleistet, dass die Crashanforderungen im gesamten Betriebstemperaturbereich des Kraftfahrzeugs von ca. -30 °C bis +80 °C erfüllt werden. Wichtig Ist hierbei insbesondere, dass im Fall eines Seitencrashs, beispielsweise bei einem seitlichen Pfahlaufprall, Chassisrahmen und Fahrzeugaufbau von Anfang an gleichzeitig und gleichmäßig die Kollisionsenergie abbauen.

Die Dicke der Klebstoffraupen 100 bis 112 beträgt bei der vorgeschlagenen Schubfestigkeit beispielsweise mindestens 3 mm, bevorzugt mindestens 4 mm. Ausgehend von Fertigungstoleranzen von beispielsweise +/-1 mm für den Chassisrahmen 2 und +/- 2 mm für den Fahrzeugaufbau 2 beträgt die Dicke der Klebstoffraupe also 7 +/- 3 mm, um die vorgeschlagene bevorzugte Mindestdicke der Klebstoffraupe von 4 mm in jedem Fall zu gewährleisten. Die Menge des aufgetragenen Klebstoffs wird dabei beispielsweise so bemessen, dass sich bei einer Dicke der Klebstoffraupe von 4 mm eine Breite der Klebefläche von 50 mm ergibt. Bei Ausschöpfen des Toleranzbandes nach oben (Dicke der Klebstoffraupe von 10 mm) ergibt sich eine Breite der Klebefläche von 20 mm.

Durch die Beschränkung der Verklebung auf den Bereich oder auf einen Teilbereich zwischen den vorderen und den hinteren Verschraubungsstellen V wird der temperaturbedingte Längenausgleich, den die Klebstoffraupen 100 und 102 zu bewältigen haben, reduziert.

Der Chassisrahmen 2 besteht, wie oben ausgeführt, bevorzugt aus einem Aluminiumwerkstoff. Zur Reduzierung des Energieaufwandes bei der Fahrzeugherstellung kann auf eine KTL-Beschichtung und auf eine herkömmliche Lackierung oder dergleichen verzichtet werden. Für diesen Fall muss vor dem Auftrag des Klebstoffs zumindest eine chemische Reinigung der Oberfläche des Chassisrahmens 2 erfolgen, um eine die Eigenschaften der Klebeverbindung beeinträchtigende Oxidationsschicht an der Oberfläche des Aluminiums zu beseitigen. Diese Reinigung erfolgt unmittelbar vor dem Auftrag des Klebstoffs, wobei gegebenenfalls auf dem Transportweg von der Reinigungsstation zum Ort des Klebstoffauftrags geeignete Maßnahmen zu treffen sind, um eine zwischenzeitliche Oxidation der Oberfläche des Aluminiums zu unterbinden.

Bei einem erfindungsgemäßen Kraftfahrzeug kann der das äußere Erscheinungsbild prägende Fahrzeugaufbau 4 für ein Nachfolgemodell des Kraftfahrzeugs neu gestaltet werden, während der für den Fahrzeugnutzer nicht unmittelbar in Erscheinung tretende Chassisrahmen 2 für das Nachfolgemodell lediglich angepasst wird. Durch den Einsatz des Chassisrahmens 2 für mehr als einen Modellzyklus eines Kraftfahrzeugs ergibt sich ein beträchtliches Kosteneinsparungspotential.

Zusammenfassend lässt sich die Erfindung wie folgt beschreiben: Die Tragstruktur eines erfindungsgemäßen Kraftfahrzeugs setzt sich aus einem Chassisrahmen 2 und einem Fahrzeugaufbau 4 zusammen. Der Chassisrahmen 2 nimmt die Elemente der vorderen und der hinteren Radaufhängungen auf, ebenso wie wenigstens ein Antriebsaggregat. Chassisrahmen 2 und Fahrzeugaufbau 4 sind einerseits über vier Verschraubungsstellen V im Bereich der oberen Abstützungen der Federbeine 28 und 46 von Vorder- und Hinterachse miteinander verschraubt. Andererseits sind Chassisrahmen 2 und Fahrzeugaufbau 4 entlang parallel zueinander verlaufender Abschnitte ihrer Tragstrukturen miteinander verklebt, wobei sich die Klebeflächen im Bereich zwischen den vorderen und hinteren Verschraubungsstellen V befinden. Entscheidend ist hierbei, dass durch die Verklebung im Mittenbereich des Kraftfahrzeugs eine großflächige Krafteinleitung vom Chassisrahmen 2 in den Fahrzeugaufbau 4 und umgekehrt gewährleistet ist. Ergänzt wird diese großflächige Krafteinleitung durch die oben erwähnten, außerhalb der Verklebung liegenden Verschraubungsstellen V.

## Patentansprüche

1. Kraftfahrzeug mit einem Chassisrahmen und einem Fahrzeugaufbau, die durch Verklebung und Verschraubung miteinander verbunden sind, **dadurch gekennzeichnet, dass**
- der Chassisrahmen (2) eine Vorderachse und eine Hinterachse sowie wenigstens ein Antriebsaggregat aufnimmt,
- die Verschraubungsstellen (V) im Bereich der Vorderachse und der Hinterachse liegen und
- die Verklebung auf den Bereich oder einen Teilbereich zwischen den vorderen und den hinteren Verschraubungsstellen (V) begrenzt ist.

2. Kraftfahrzeug nach Anspruch 1,
**dadurch gekennzeichnet, dass** sich die Verschraubungsstellen (V) oberhalb der Vorderachse und/oder der Hinterachse befinden.

3. Kraftfahrzeug nach Anspruch 1 oder 2,
**dadurch gekennzeichnet, dass** die Verschraubungsstellen (V) als etwa parallel zueinander verlaufende Flächen an Chassisrahmen (2) und Fahrzeugaufbau (4) ausgebildet sind.

4. Kraftfahrzeug nach einem der vorgenannten Ansprüche,
**dadurch gekennzeichnet, dass** sich die Verschraubungsstellen (V) an der Abstützung (26, 40; 82, 92; 84, 94) einer Feder-Dämpfer-Einheit (28, 46) oder dergleichen befinden.

5. Kraftfahrzeug nach einem der vorgenannten Ansprüche,
**dadurch gekennzeichnet, dass** die Klebeflächen als etwa parallel zueinander verlaufende Flächen an Chassisrahmen (2) und Fahrzeugaufbau (2) ausgebildet sind, die im zusammengeschraubten Zustand von Chassisrahmen (2) und Fahrzeugaufbau (4) mit einem definierten Abstand zueinander verlaufen.

6. Kraftfahrzeug nach Anspruch 5,
**dadurch gekennzeichnet, dass** der Abstand zwischen den Klebeflächen an Chassisrahmen (2) und Fahrzeugaufbau (4) - im zusammengeschraubten Zustand von Chassisrahmen (2) und Fahrzeugaufbau (4) - mindestens drei Millimeter beträgt.

7. Kraftfahrzeug nach einem der vorgenannten Ansprüche,
**dadurch gekennzeichnet, dass** der für die Verklebung verwendete Klebstoff ein Einkomponentenkleber ist.

8. Kraftfahrzeug nach einem der vorgenannten Ansprüche,
**dadurch gekennzeichnet, dass** der Chassisrahmen (2) einen mittleren Abschnitt (12) mit zwei fahrzeugaußenseitigen seitlichen Längsträgern (30, 32) aufweist.

9. Kraftfahrzeug nach Anspruch 8,
**dadurch gekennzeichnet, dass** die Enden der seitlichen Längsträger (30, 32) durch einen vorderen und durch einen hinteren Querträger (34, 36) miteinander verbunden sind, wobei die Längsträger (30, 32) und die Querträger (34, 36) im Wesentlichen in einer Ebene verlaufen.

10. Kraftfahrzeug nach Anspruch 8 und/oder 9,
**dadurch gekennzeichnet, dass** die Oberseiten der Längs- und/oder Querträger (30 bis 36) als Klebeflächen ausgebildet sind.

11. Kraftfahrzeug nach einem der Ansprüche 8 bis 10,
**dadurch gekennzeichnet, dass** die Oberseiten der Längs- und/oder Querträger (30 bis 36) tiefer liegen als die Verschraubungsstellen (V).

12. Kraftfahrzeug nach einem der vorgenannten Ansprüche,
**dadurch gekennzeichnet, dass** der Fahrzeugaufbau (4) als Fahrgastzelle (6) mit Boden (72) ausgebildet ist.

13. Kraftfahrzeug nach einem der vorgenannten Ansprüche,
**dadurch gekennzeichnet, dass** der Chassisrahmen (2) zumindest überwiegend aus einem metallischen Werkstoff und der Fahrzeugaufbau (4) zumindest überwiegend aus einem Kunststoffmaterial besteht.

14. Kraftfahrzeug nach Anspruch 13,
**dadurch gekennzeichnet, dass** der Chassisrahmen (2) zumindest überwiegend aus einem Aluminiumwerkstoff besteht, der an den Klebeflächen keine Oberflächenbeschichtung aufweist.

## Claims

1. A motor vehicle with a chassis frame and a body which are bonded and screwed together, **characterised in that**
- the chassis frame (2) holds a front axle, a rear axle and at least one drive unit,
- the screwing places (V) are near the front axle and the rear axle and
- bonding is limited to the region or part-region between the front and rear screwing places (V).

2. A motor vehicle according to claim 1, **characterised in that** the screwing places (V) are located above the front axle and/or the rear axle.

3. A motor vehicle according to claim 1 or 2, **characterised in that** the screwing places (V) are formed as approximately mutually parallel surfaces on the chassis frame (2) and the body (4).

4. A motor vehicle according to any of the preceding claims, **characterised in that** the screwing places (V) are on the means (26, 40; 82, 92; 84, 94) supporting a spring-and-shock-absorber unit (28, 46) or the like.

5. A motor vehicle according to any of the preceding claims, **characterised in that** the bonded surfaces are formed as approximately mutually parallel surfaces on the chassis frame (2) and body (4) and extend at a defined distance from one another when the chassis frame (2) and the body (4) are screwed together.

6. A motor vehicle according to claim 5, **characterised in that** the distance between the bonded surfaces on the chassis frame (2) and the body (4), when screwed together, is at least 3 mm.

7. A motor vehicle according to any of the preceding claims, **characterised in that** the adhesive used for bonding is a single-component adhesive.

8. A motor vehicle according to any of the preceding claims, **characterised in that** the chassis frame (2) has a central portion (12) with two side longitudinal beams (32) on the outside of the vehicle.

9. A motor vehicle according to claim 8, **characterised in that** the ends of the side longitudinal beam (30, 32) are connected together by a front and a rear crossbeam (34, 36), wherein the longitudinal beams (30, 32) and the crossbeams (34, 36) extend substantially in one plane.

10. A motor vehicle according to claim 8 and/or 9, **characterised in that** the top surfaces of the longitudinal beams and/or crossbeams (30 - 36) are formed as adhesive surfaces.

11. A motor vehicle according to any of the claims 8 to 10, **characterised in that** the top surfaces of the longitudinal beams and/or crossbeams (30 - 36) are lower than the screwing places (V).

12. A motor vehicle according to any of the preceding claims, **characterised in that** the body (4) is a passenger compartment (6) with a floor (72).

13. A motor vehicle according to any of the preceding claims, **characterised in that** the chassis frame (2) is at least mainly made of metallic material and the body (4) is at least mainly made of plastics material.

14. A motor vehicle according to claim 13, **characterised in that** the chassis frame (2) is at least mainly made of an aluminium material without any coating on the bonded surfaces.

## Revendications

1. Véhicule comportant un cadre de châssis et une carrosserie qui sont reliés par collage et vissage,
**caractérisé en ce que**
- le cadre de châssis (2) reçoit un essieu avant et un essieu arrière ainsi qu'au moins une unité d'entrainement,
- les emplacements de vissage (V) sont situés dans la zone de l'essieu avant et de l'essieu arrière, et
- le collage est limité à la zone ou à une zone partielle entre les emplacements de vissage avant et arrière (V).

2. Véhicule conforme à la revendication 1,
**caractérisé en ce que**
les emplacements de vissage (V) sont situés au-dessus de l'essieu avant et/ou de l'essieu arrière.

3. Véhicule conforme à la revendication 1 ou 2,
**caractérisé en ce que**
les emplacements de vissage (V) sont réalisés sous la forme de surfaces du cadre du châssis (2) et de la carrosserie (4) s'étendant essentiellement parallèlement.

4. Véhicule conforme à l'une des revendications précédentes,
**caractérisé en ce que**
les emplacements de vissage (V) sont situés sur le support (26, 40 ; 82, 92 ; 84, 94) d'une unité d'amortissement élastique (28, 46) ou similaire.

5. Véhicule conforme à l'une des revendications précédentes,
**caractérisé en ce que**
les surfaces adhésives sont réalisées sous la forme de surfaces du cadre de châssis (2) et de la carrosserie (4) s'étendant essentiellement parallèlement qui, lorsque ce cadre de châssis (2) et cette carrosserie (4) sont vissés, sont situées à une distance définie l'une de l'autre.

6. Véhicule conforme à la revendication 5,
**caractérisé en ce que**
la distance entre les surfaces adhésives du cadre de châssis (2) et de la carrosserie (4) est au moins égale à 3 mm lorsque le cadre de châssis (2) et la carrosserie (4) sont vissés.

7. Véhicule conforme à l'une des revendications précédentes,
**caractérisé en ce que**
l'adhésif utilisé pour le collage est un adhésif mono-composant.

8. Véhicule conforme à l'une des revendications précédentes,
**caractérisé en ce que**
le cadre de châssis (2) comporte un segment médian (12) muni de deux longerons latéraux (30, 32) situés sur les côtés externes du véhicule.

9. Véhicule conforme à la revendication 8,
**caractérisé en ce que**
les extrémités des longerons latéraux (30, 32) sont reliées par une traverse avant et par une traverse arrière (34, 36), les longerons (30, 32) et les traverses (34, 36) s'étendant essentiellement dans un plan.

10. Véhicule conforme à la revendication 8 et/ou 9,
**caractérisé en ce que**
les faces supérieures des longerons et/ou des traverses (30 à 36) sont réalisés sous la forme de surfaces adhésives.

11. Véhicule conforme à l'une des revendications 8 à 10,
**caractérisé en ce que**
les faces supérieures des longerons et/ou des traverses (30 à 36) sont plus basses que les emplacements de collage (V).

12. Véhicule conforme à l'une des revendications précédentes,
**caractérisé en ce que**
la carrosserie (4) est réalisée sous la forme d'un habitacle de passager (6) ayant un fond (72).

13. Véhicule conforme à l'une des revendications précédentes,
**caractérisé en ce que**
le cadre de châssis (2) est réalisé au moins principalement en un matériau métallique tandis que la carrosserie (4) est réalisée au moins principalement en un matériau synthétique.

14. Véhicule conforme à la revendication 13,
**caractérisé en ce que**
le cadre de châssis (2) est réalisé au moins principalement en un matériau à base d'aluminium qui ne comporte aucun revêtement de surface sur les faces adhésives.
